(19) Europäisches Patentamt
European Patent Office
Office européen des brevets

(11) **EP 2 012 115 A2**

(12) **EUROPEAN PATENT APPLICATION**

(43) Date of publication:
**07.01.2009 Bulletin 2009/02**

(51) Int Cl.:
***G01N 27/12*** *(2006.01)*

(21) Application number: **08159174.5**

(22) Date of filing: **27.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **02.07.2007 US 772468**

(71) Applicant: **Therm-O-Disc Incorporated Mansfield, Ohio 44907-0538 (US)**

(72) Inventor: **Starling, Jared Mansfield, OH 44907 (US)**

(74) Representative: **Inspicos A/S Kogle Allé 2 P.O. Box 45 2970 Hørsholm (DK)**

(54) **Chemiresistor sensor system compensated for temperature and aging effects**

(57) A chemiresistor sensor system compensated for temperature and aging effects is disclosed and includes a sensing element exposed to an atmosphere of an ambient environment to be monitored for the presence and/or concentration of a flammable vapor and a temperature compensation element which is isolated from the atmosphere of the ambient environment. The sensing element and the temperature compensation element are electrically connected in series and have similar performance in response to temperature changes and temperature cycling. The output of the chemiresistor sensor system, which is the voltage drop across the sensing element, remains unchanged despite the changes in resistance of the sensing element in response to temperature changes. Therefore, the chemiresistor sensor system can more accurately and consistently detect the presence of flammable vapor in environments subject to temperature changes and/or over long periods of time.

Fig-1

**Description**

FIELD

The present disclosure relates to flammable vapor sensors, and more particularly to chemiresistor sensor systems that can compensate for temperature and aging effects.

BACKGROUND

The statements in this section merely provide background information related to the present disclosure and may not constitute prior art.

Detecting the presence of flammable vapor or chemical compounds is important for many applications, including for example, detecting whether the concentration of flammable vapor exceeds flammability limits.

A variety of different flammable vapor sensor systems known in the art can be used to detect the presence and concentration of flammable vapor. For example, conductiometric sensor systems, optical sensor systems, and surface acoustic wave sensor systems can all be used.

One type of conductiometric sensor is a polymer-absorption chemiresistor sensor. Polymer-absorption chemiresistor sensors include a sensor probe having a pair of electrodes and a sensing element. The probe is part of a sensor circuit. The sensing element typically takes the form of a polymeric sensor film that spans the two electrodes. The sensor film is exposed to the surrounding atmosphere. The exact composition of the polymeric sensor film varies depending on flammable vapor such that the sensor film absorbs flammable vapor when it is present in the surrounding atmosphere.

Upon exposure to and absorption of flammable vapor, the sensor film swells and undergoes a volumetric change. The change in volume changes the electrical resistance of the film which can be measured via the electrodes.

A processor or control unit is typically coupled to the sensor circuit. The processor monitors the resistance of the sensor film to determine the absence, presence, and concentration of flammable vapor. The processor can be coupled to a user interface. The user interface typically includes an indicating device that generates a signal when the concentration of flammable vapor exceeds a predetermined threshold value.

The resistance of the sensor film, however, changes not only in response to absorption of flammable vapor, but also in response to changes in ambient temperature. If the sensor film has a positive temperature coefficient of resistance, the resistance of the sensor film increases as ambient temperature increases. If the sensor film has a negative temperature coefficient of resistance, the resistance of the sensor film decreases as ambient temperature increases. Whether the sensor film has a positive or negative temperature coefficient of resistance depends on the composition of the sensor film and its application.

Because detection of flammable vapor is based on changes in the resistance of the sensor film that occur when the sensor absorbs flammable vapor, changes in ambient temperature that change the resistance of the sensor film can negatively affect the sensor system's ability to accurately detect the presence of flammable vapor. For example, if the sensor film has a positive temperature coefficient of resistance and increases in resistance upon the absorption of flammable vapor, increases in ambient temperature might cause the sensor system to generate a false signal indicating that flammable vapor is present when it is not.

Aging of a typical chemiresistor sensor over time can cause a drift in performance, particularly when a chemiresistor sensor is subject to temperature cycling. With the combined effects of temperature and aging, the chemiresistor sensor can not accurately detect the presence or concentration of the flammable vapor.

SUMMARY

Several embodiments of the present disclosure provide for a temperature and aging compensated chemiresistor sensor system, which can more accurately respond to the presence of flammable vapor. The output voltage of the sensor system, which is used to indicate the presence of flammable vapor is not affected by ambient temperature changes and aging of the sensor system. In one form, a chemiresistor sensor system includes a sensing element for detecting the presence of flammable vapor and a temperature compensation element electrically connected in series with the sensing element. The sensing element and the temperature compensation element respond to temperature changes in a similar fashion (for example, have a known temperature-dependent performance). The temperature compensation element is isolated from the ambient environment.

In another form, a chemiresistor sensor system includes a sensing element for detecting the presence of flammable vapor in an atmosphere of an ambient environment to be monitored for the presence of flammable vapor and a temperature compensation element isolated from the ambient environment. The resistance of each of the sensing element and the temperature compensation element changes in response to temperature changes in the ambient environment in a known manner.

In yet another form, a chemiresistor sensor system includes a first resistor and a second resistor. The first resistor is exposed to an atmosphere of an ambient environment to be monitored for the presence of flammable vapor. The second resistor is isolated from the atmosphere of the ambient environment and connected in series with the first resistor. The second resistor has a temperature coefficient of resistance approximately equal to that of the first resistor so that when subjected to a temperature change in the ambient environment, the resistance of both the first resistor and the second resistor changes substantially the same amount and that a voltage drop across the first resistor remains substantially constant.

Further areas of applicability will become apparent from the description provided herein. It should be understood that the description and specific examples are intended for purposes of illustration only and are not intended to limit the scope of the present disclosure.

DRAWINGS

The drawings described herein are for illustration purposes only and are not intended to limit the scope of the present disclosure in any way.

Figure 1 is a block diagram of a chemiresistor sensor system according to the teachings of the present disclosure; and

Figure 2 is an exemplary schematic circuit diagram of a sensor probe of a chemiresistor sensor system according to a first embodiment of the present disclosure; and

Figure 3 is an exemplary schematic circuit diagram of a sensor probe of a chemiresistor sensor system according to a second embodiment of the present disclosure.

Corresponding reference numerals indicate corresponding parts throughout the several views of the drawings.

DETAILED DESCRIPTION

The following description is merely exemplary in nature and is not intended to limit the present disclosure, application, or uses.

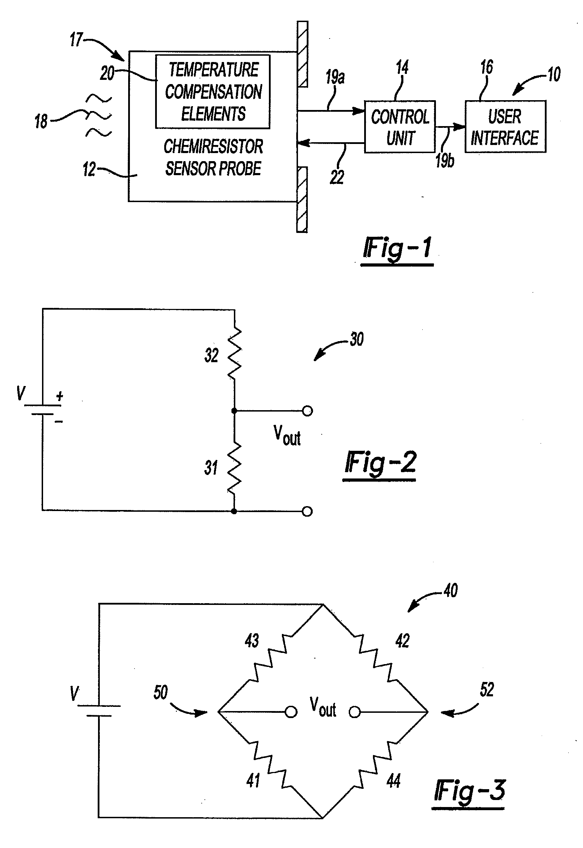

Figure 1 generally depicts the major components of an exemplary chemiresistor sensor system at 10. The sensor system 10 is generally comprised of a chemiresistor sensor probe 12, a control unit 14, and a user interface 16. The sensor probe 12 includes a temperature compensation element 20.

The sensor probe 12 interacts with an external environment 17 to detect the presence of chemical compositions of interest, or flammable vapor 18. The sensor probe 12 generates a raw output signal 19a based on continuous detection of flammable vapor 18 in the external environment 17. The raw output signal 19a is processed by the control unit 14. The control unit 14 transmits a calculated output 19b to the user interface 16 to relay analysis of the raw output signal 19a from the sensor probe 12. The control unit 14 can supply operating commands and power, for example, both represented at 22, to the probe 12.

The user interface 16 provides information to a user regarding the status of the sensor system 10, such as whether or not the system 10 detects the presence of flammable vapor 18. The user interface 16 can be of a variety of different forms known in the art and can range from a simple alarm signal to a sophisticated computerized display.

The sensor probe 12 can take the form of a variety of different sensor probes. For example, the sensor probe 12 can take the form of any of the sensor probes described in U.S. Pat. No. 7,113,304, titled "Robust Chemiresistor Sensor." The sensor probe 12 may include a conductive sensor element or film, which absorbs flammable vapor 18 and changes resistance upon absorbing flammable vapor. The sensor film can be any suitable sensor film known in the art, such as those described in U.S. Patent Application No. 10/411,805, which was filed on April 11, 2003 and is titled "Vapor Sensor and Materials Therefor." The contents of these patents are hereby incorporated by reference in their entirety.

Referring to Figure 2, an exemplary schematic circuit diagram for the sensor probe 12 is illustrated at 30. In this embodiment, the sensor probe 12 includes a sensing element in the form of a first resistor 31 and a temperature compensation element in the form of a second resistor 32. The first and second resistors 31 and 32 are connected electrically in series to form a voltage divider circuit. The first resistor 31 is exposed to the ambient environment to be monitored for the presence and/or concentration of flammable vapor and the resistance of the first resistor 31 will be affected in the presence of flammable vapor. The second resistor 32 is isolated from the ambient environment to be monitored and the resistance of the second resistor 32 will not be affected by the flammable vapor when the flammable vapor is present. Therefore, the second resistor 32 functions as a reference element for determining the effect of the flammable vapor on the first resistor 31. Preferably, the second resistor 32 is isolated from the ambient environment to be monitored by a coating, a cover, or a housing.

Throughout the disclosure, the term "exposed" or "exposed to an ambient environment" refers to a condition where a component is exposed to the atmosphere of the ambient environment to be monitored for the presence of flammable vapor, whereas the term "isolated" or "isolated from an ambient environment" refers to a condition where a component is isolated from the atmosphere of the ambient environment to be monitored and thus is isolated from flammable vapor, if any, in the environment, but not from temperature changes in the environment.

The sensor probe 12 has an output voltage, which is equivalent to a voltage drop across the first resistor 31. In the presence of flammable vapor, the first resistor 31, which is exposed to the ambient environment, changes resistance relative to the second resistor 32 (which is isolated from the ambient environment and thus the flammable vapor), resulting in a change in the voltage drop across the first resistor 31. A signal corresponding to the voltage drop is transmitted to the control unit 14 to indicate the presence and/or concentration of the flammable vapor.

The first resistor 31 and the second resistor 32 have similar characteristics, particularly similar temperature-dependent characteristics. Preferably, the first resistor 31 and the second resistor 32 have like or same temperature coefficients of resistance α, so that the first resistor 31 and the second resistor 32 change their resistance in a similar fashion in response to temperature changes and cycling.

More specifically, the output voltage $V_{out}$ of the sensor probe 12 (which is equal to the voltage drop across the first resistor 31) at temperature $T_1$ can be described as:

$$V_{out(T1)} = \frac{R1}{R1+R2}V$$

wherein V is the voltage applied to the electric circuit 30, R1 and R2 are the resistance of the first resistor 31 and the second resistor 32, respectively, at temperature T1.

When the ambient temperature is increased by ΔT (from $T_1$ to $T_2$), the resistance of resistor 31 changes from R1 to R1(1+αΔT), and the resistance of resistor 32 changes from R2 to R2 (1+αΔT), wherein α is the temperature coefficient of resistance and can be positive or negative.

The output voltage $V_{out}$ of the sensor probe at temperature T2 can be described as:

$$V_{out(T2)} = \frac{R1(1+\alpha\Delta T)}{R1(1+\alpha\Delta T)+R2(1+\alpha\Delta T)}V = \frac{R1}{R1+R2}V$$

Because the first resistor 31 and the second resistor 32 have similar or like temperature-dependent performance, the environmental factors such as temperature and/or sensor aging will result in changes in resistance in both the first resistor 31 and the second resistor 32. As a result, the output voltage (i.e., voltage drop across the first resistor 31) is not affected by the temperature changes and/or sensor aging. $V_{out}$ will change only when the resistance of the first resistor 31 changes in the presence of flammable vapor because the resistance of the second resistor 32 does not change in the presence of flammable vapor.

Referring to Figure 3, an exemplary schematic circuit diagram for a sensor probe according to a second embodiment of the present disclosure is indicated by reference numeral 40. The circuit 40 includes a sensing element and a temperature compensation element arranged to form a bridge circuit. The sensing element includes a first resistor 41 and a second resistor 42. The temperature compensation element includes a third resistor 43 and a fourth resistor 44. The first resistor 41 and the second resistor 42 are exposed to the ambient environment to be monitored for the presence and/or concentration of flammable vapor, whereas the third resistor 43 and the fourth resistor 44 are isolated from the ambient environment and function as reference elements. The bridge circuit is preferably a Wheatstone bridge comprising four legs, two legs included in a first side 50 and two legs included in a second side 52. The first resistor 41 and the third resistor 43 are connected in series in the first side 50, and the second resistor 42 and the fourth resistor 44 are connected in series in the second side 52. Each side 50 or 52 has one resistor exposed to the ambient environment and one resistor isolated from the ambient environment. The resistors in the same side have similar characteristics, particularly similar temperature-dependent characteristics. The output voltage of the sensor probe is the voltage drop across the mid-points of the two sides 50 and 52.

More specifically, the voltage output of the sensor probe at temperature $T_1$ can be described as follows:

$$V_{out(T1)} = \left[\frac{R1}{R1+R3} - \frac{R4}{R2+R4}\right]V$$

wherein V is the voltage applied to the sensor probe 12, and R1, R2, R3 and R4 are the resistance of the first resistor 41, second resistor 42, third resistor 43 and fourth resistor 44, respectively, at temperature T1.

The first resistor 41 and the third resistor 43 are connected in series in the same side 50 and have like or same temperature coefficients of resistance $\beta$. The resistance of the first resistor 41 and the third resistor 43 changes from R1 and R3 to R1(1+ $\beta\Delta T$) and R3(1+ $\beta\Delta T$), respectively, at temperature T2, wherein $\Delta T = T_2 - T_1$.

The second resistor 42 and the fourth resistor 44 are connected in series in the same side 52 and have like or same temperature coefficient of resistance Y. The resistance of the second resistor 42 and the fourth resistor 43 changes from R2 and R4 to R2(1+ Y$\Delta T$) and R4(1+ Y$\Delta T$), respectively, at temperature T2.

Therefore, the voltage output of the sensor probe at temperature $T_2$ can be described as follows:

$$V_{out(T2)} = \left[ \frac{R1(1+\beta\Delta T)}{R1(1+\beta\Delta T) + R3(1+\beta\Delta T)} \right] - \left[ \frac{R4(1+\gamma\Delta T)}{R2(1+\gamma\Delta T) + R4(1+\gamma\Delta T)} \right] V = \left[ \frac{R1}{R1+R3} - \frac{R4}{R2+R4} \right] V$$

Because the first resistor 41 (exposed) and the third resistor 43 (isolated) have similar characteristics, the temperature change/cycling does not affect the voltage drop across the first resistor 41 in the first side 50. Similarly, because the second resistor 42 (exposed) and the fourth resistor 44 (isolated) have similar characteristics, the temperature change/cycling does not affect the voltage drop across the second resistor 42. Accordingly, the voltage output $V_{out}$ of the sensor probe 12 across the mid-points of the two sides 50 and 52 remain unaffected by temperature-related factors, such as temperature changes and aging of the sensor system caused by temperature cycling. The voltage output $V_{out}$ will only change in the presence of flammable vapor because the resistance of the two resistors in the same side of the bridge circuit does not change in a similar fashion.

It should be understood and appreciated that while two resistors 41 and 42 are shown to be exposed to the ambient environment in the bridge circuit of Figure 3, the similar compensation effect can be achieved by using only one exposed resistor in the bridge circuit.

With the configuration of the chemiresistor sensor system, the temperature compensation element compensates for changes in the resistance of the sensing element that occurs due to changes in ambient temperature. Therefore, the chemiresistor sensor system can distinguish between changes in resistance caused by the presence of flammable vapor versus changes in resistance caused by changes in ambient temperature. As a result, the chemiresistor sensor system of the present disclosure can more accurately detect the presence of flammable vapor 18.

Compensation for resistance drifting over life is also achieved by the concept of the present disclosure. Typical aging characteristics for a chemiresistor sensor system includes resistance drifting over time, particularly when the chemiresistor sensor is subject to temperature cycling. By using an isolated resistor as a reference element, the sensor probe is more stable and is not affected by temperature-related factors due to the relative nature of the output voltage of the sensor probe.

Because the output voltage of the sensor system is compensated by an isolated resistor, the chemiresistor sensor system does not require additional analytical software to analyze the temperature and aging effect, thereby resulting a simpler structure.

While the isolated resistor as a temperature or aging compensation element has been described in the context of a voltage divider and a Wheatstone bridge circuit, it should be understood and appreciated that the isolated resistor as a temperature or aging compensation element can be used in other electric circuits without departing from the spirit of the present disclosure.

This description is merely exemplary in nature and, thus, variations that do not depart from the gist of the disclosure are intended to be within the scope of the disclosure. Such variations are not to be regarded as a departure from the spirit and scope of the invention.

## Claims

1. A chemiresistor sensor system comprising:

   a sensing element for detecting the presence of flammable vapor in an atmosphere of an ambient environment; and
   a temperature compensation element electrically connected in series with the sensing element, the temperature compensation element being isolated from the atmosphere of the ambient environment; and
   wherein the sensing element and the temperature compensation element respond to temperature changes in a similar fashion.

2. The chemiresistor sensor system of claim 1, wherein the temperature compensation element has a temperature coefficient of resistance about the same as the sensing element.

3. The chemiresistor sensor system of claim 1, wherein the temperature compensation element has a temperature coefficient of resistance equal to that of the sensing element.

4. The chemiresistor sensor system of claim 3, wherein the temperature coefficient of resistance is positive.

5. The chemiresistor sensor system of claim 3, wherein the temperature coefficient of resistance is negative.

6. The chemiresistor sensor system of claim 1, wherein the chemiresistor sensor system provides an output equal to a voltage drop across the sensing element.

7. The chemiresistor sensor system of claim 1, wherein the sensing element and the temperature compensation element are arranged to form a part of a voltage divider.

8. The chemiresistor sensor system of claim 1, wherein the sensing element and the temperature compensation element are arranged to form a part of a bridge circuit.

9. The chemiresistor sensor system of claim 1, wherein the temperature compensation element is isolated from the atmosphere of the ambient environment by a component selected from a group consisting of a coating, a cover, and a housing.

10. A chemiresistor sensor system comprising:

   a sensing element for detecting the presence of flammable vapor in an atmosphere of an ambient environment to be monitored for presence of flammable vapor; and
   a temperature compensation element isolated from the ambient environment, the resistance of each of the temperature compensation element and the sensing element changing in response to temperature changes in the ambient environment in a known manner.

11. The chemiresistor sensor system of claim 10, further comprising an output equal to a voltage drop across the sensing element.

12. The chemiresistor sensor system of claim 10, wherein the sensing element and the temperature compensation element are electrically connected in series.

13. The chemiresistor sensor system of claim 10, wherein the sensing element and the temperature compensation element form a voltage divider.

14. The chemiresistor sensor system of claim 10, wherein the sensing element and temperature compensation element comprise a bridge circuit.

15. The chemiresistor sensor system of claim 14, wherein the bridge circuit comprises a Wheatstone bridge having four legs, each leg including a resistor, and two sides connected in parallel, each side comprising two legs of the bridge.

16. The chemiresistor sensor system of claim 15, wherein at least one of the resistors is exposed to the atmosphere of the ambient environment and the remaining resistors are isolated from the atmosphere of the ambient environment.

17. The chemiresistor sensor system of claim 15, wherein the sensing element includes a first resistor and a second resistor and the temperature compensation element includes a third resistor and a fourth resistor, one of the first and second resistors connected in series with one of the third and fourth resistors in a first side of the Wheatstone bridge, the other one of the first and second resistors connected in series with the other one of the third and fourth resistor in a second side of the Wheatstone bridge, the first resistor and the second resistor located in opposite legs of the Wheatstone bridge.

18. The chemiresistor sensor system of claim 17, wherein the output voltage of the sensor system is the voltage measured between the mid-point of the first side and the mid-point of the second side.

19. The chemiresistor sensor system of claim 10, wherein the temperature compensation element has a temperature coefficient of resistance equal to that of the sensing element.

20. A chemiresistor sensor system, comprising:

a first resistor exposed to an atmosphere of an ambient environment to be monitored for the presence of flammable vapor; and
a second resistor isolated from the atmosphere of the ambient environment and connected in series with the first resistor,
wherein the second resistor has a temperature coefficient of resistance approximately equal to that of the first resistor so that when subjected to a temperature change in the ambient environment the resistance of both the first resistor and the second resistor changes substantially the same amount and that a voltage drop across the first resistor remains constant.

17

20

18

12

TEMPERATURE
COMPENSATION
ELEMENTS

CHEMIRESISTOR
SENSOR PROBE

19a

22

14

CONTROL
UNIT

19b

16

USER
INTERFACE

10

_Fig-1_

30

32

$V$ + −

31

$V_{out}$

_Fig-2_

40

$V$

50

43

42

41

$V_{out}$

52

44

_Fig-3_

8

## REFERENCES CITED IN THE DESCRIPTION

**Patent documents cited in the description**

- US 7113304 B
- US 41180503 A